# EUROPEAN PATENT SPECIFICATION

(11) **EP 2 609 727 B1**
(45) Date of publication and mention of the grant of the patent: **25.09.2019**
(21) Application number: 10751589.2
(22) Date of filing: 25.08.2010
(51) Int. Cl.: H04M 3/436, H04M 7/12, H04L 29/06

(54) **METHOD AND APPARATUS FOR REGISTRATION OF AN EMERGENCY SERVICE IN PACKET DATA CONNECTIONS**
VERFAHREN UND VORRICHTUNG ZUR REGISTRIERUNG EINES NOTDIENSTES BEI PAKETDATENVERBINDUNGEN
PROCÉDÉ ET APPAREIL D'ENREGISTREMENT D'UN SERVICE DE SECOURS DANS DES CONNEXIONS DE DONNÉES PAR PAQUETS

(43) Date of publication of application: 03.07.2013
(73) Proprietor: Nokia Solutions and Networks Oy, 02610 Espoo (FI)
(72) Inventor: MILINSKI, Alexander, 81371 München (DE); VARGA, Jozsef, H-7985 Nagydobsza (HU)
(74) Representative: Ruuskanen, Juha-Pekka
(86) International application number: PCT/EP2010/062414
(87) International publication number: WO 2012/025151

(56) References cited:
- WO-A1-2008/009234
- CN-A- 101 730 037
- CN-A- 101 730 039

## Description

### Technical field of the invention:

The present invention relates to a mechanism for registration. In particular, the present invention is related to a method and apparatus for assigning for a user an internet protocol (IP) address allocated for an emergency packet data connection.

### Background of the invention:

Within the IP (Internet Protocol) Multimedia Subsystem (IMS) as defined by 3^{rd} Generation Partnership Project (3GPP) Session Initiation Protocol (SIP) defined by Internet Engineering Task Force (IETF) is used for controlling communication. SIP is an application-layer control protocol for creating, modifying, and terminating sessions with one or more participants. These sessions may include Internet multimedia conferences, Internet telephone calls, and multimedia distribution. Members in a session can communicate via multicast or via a mesh of unicast relations, or a combination of these. Session Description Protocol (SDP) is a protocol which conveys information about media streams in multimedia sessions to allow the recipients of a session description to participate in the session. The SDP offers and answers can be carried in SIP messages. Diameter protocol has been defined by IETF and is intended to provide an Authentication, Authorization and Accounting (AAA) framework for applications such as network access or IP mobility.

Generally, for properly establishing and handling a communication connection between network elements such as a user equipment and another communication equipment or user equipment, a database, a server, etc., one or more intermediate network elements such as control network elements, support nodes, service nodes and interworking elements are involved which may belong to different communication networks.

Also procedures for IMS emergency services have been defined by the 3GPP. Emergency call is an example of emergency services. Before establishing an IMS emergency session, user equipment (UE) must attach to the IP connectivity access network (IP-CAN) and (if required by local regulations) must be registered to the IMS. To support IMS emergency services, some access technologies define emergency attach procedure, which may suppress subscription checking and security procedures and provides prioritization for the UE. The resulting emergency PDN connection must be used for emergency procedures (emergency registration and emergency session) only. In session control layer (IMS), a P-CSCF shall reject any IMS registration which is not for the emergency purpose, but received using an emergency PDN connection.

WO2008009234 defines a method for identifying the abuse of emergency bearer resources. If information from an application layer does not comprise an emergency service indicator, then a determination that emergency resources are being abused is made.

CN 101730039 discloses a method in which an emergency bearer is established for a user equipment. An IP address corresponding to the established emergency bearer is sent to the HSS. The HSS may distribute this information. The user equipment is then prevented from using the user bearer for a normal service.

CN 101730037 describes a dedicated P-CSCF which is used for emergency connections only.

### Summary of the invention

The present invention overcomes above drawbacks by providing a session control entity according to claim 1.

Further, a method according to claim 4 is provided.

A computer program product comprising code means adapted to produce the above method steps when loaded into the memory of the computer is also provided according to claim 6.

Further, a system according to claim 5 is provided.

Embodiments of the present invention may have one or more of following advantages:
P-CSCF can reject any IMS registration which is not for the emergency purpose, but received from an emergency PDN connection. UE initiating emergency registration request receive priority in both SIP and PDN connection, prevent fraudulent users (UEs) to use emergency PDN connections for non-emergency purposes, usage of emergency PDN connection and normal PDN connection can be distinguished on SIP layer.

### Description of drawings

Figures 1 illustrates signalling between relevant network elements according to aspects of the invention.
Figures 2 and 3 illustrate examples of internal structure and functions of apparatuses implementing aspects of the invention.
Figures 4 and 5 illustrate an example processes for implementing aspects of the invention.

### Detailed description of the invention

Different types of network entities and functions exist in the IMS network. Call Session Control Functions (CSCF) implement a session control function in SIP layer. The CSCF can act as Proxy CSCF (P-CSCF), Serving CSCF (S-CSCF) or Interrogating CSCF (I-CSCF). The P-CSCF is the first contact point for the User Equipment (UE) within the IMS; the S-CSCF handles the session states in the network; the I-CSCF is mainly the contact point within an operator's network for all IMS connections destined to a subscriber of that network operator, or a roaming subscriber currently located within that network operator's service area.

The functions performed by the I-CSCF are, for example, assigning an S-CSCF to a user performing a SIP registration and routing SIP requests received from another network towards the S-CSCF. The S-CSCF can perform the session control services for the UE. It maintains a session state as needed by the network operator for support of the services and may be acting as Registrar, i.e. it accepts registration requests and makes its information available through the location server (e.g. HSS). The S-CSCF is the central point to users that are hosted by this S-CSCF. The S-CSCF can provide services to registered and unregistered users when it is assigned to these users. This assignment can be stored in the Home Subscriber Server (HSS).

IP-Connectivity Access Network (IP-CAN) refers to the collection of network entities and interfaces that provides the underlying IP transport connectivity between the UE and the IMS entities. For example, a GPRS network can be used as an IP-connectivity access network.

Serving GPRS support node (SGSN) is a GPRS support node in the IP-CAN that serves GPRS mobile stations by sending or receiving packets via a base station subsystem or a radio access network. SGSN is the basic element of the GPRS infrastructure. It stores for each mobile in its context different parameters used to route the packets, for example information about the mobile's location.

Gateway GPRS support node (GGSN) is a GPRS support node in the IP-CAN that is responsible for IP address allocation for GPRS mobile stations in the GPRS attach procedure.

Mobility management entity (MME) is a control node in the IP-CAN that is responsible for managing and storing the user equipment and user identities, mobility state, security parameters, and the IP bearer status, in the context of long-term evolution (LTE). The MME can, for example, authenticate the user, generate temporary identities, and allocate them to the UEs. The MME can check whether the UE can camp on the tracking area or on the public land mobile network (PLMN). The MME is a subcomponent of the evolved packet core (EPC).

Packet Data Network (PDN) Gateway (PDN-GW, P-GW) is the Evolved Packet Core (EPC) network element, which is responsible for IP address allocation in the EPC attach procedure.

In an IMS registration with a CSCF, user equipment (UE) registers itself to a CSCF for a specific time, and the CSCF becomes the UE's serving CSCF (S-CSCF). The time for which the UE is registered in the CSCF is called registration lifetime. For the registration lifetime a binding can be created between the Contact address (IP address) of the UE and the public user identities of the user (both can be provided in the registration request).

Emergency registration is a special registration that relates to binding of a public user identity to a contact address used for emergency service. The contact address can be embedded in SIP Contact header. Emergency service related requests can obtain priority over normal requests in the IMS.

Public safety answering point (PSAP) is a network element for emergency services that is responsible for answering emergency calls.

Authentication procedure is confirmation of the claimed identity of a user. Authentication can be done, for example, with passwords or a user name, or by checking that the system is the one to which the user wishes to have a connection, for example a web site. Authentication can also involve the use of a cryptographic system and digital signatures. The party being authenticated can be a user, subscriber, home environment, or serving network.

Before UE is able to communicate with the IMS, the UE establishes a packet data network (PDN) connection with an IP-CAN, such as GPRS access network. The UE can obtain an IP address using either the standard IETF protocols, for example, Dynamic Host Configuration Protocol (DHCP) or Internet Protocol Control Protocol (IPCP) or some other method that is specific to the IP-CAN to which the UE is connecting. The UE can use the obtained IP address for signaling from the initial registration onwards throughout the period the UE is connected to the IMS. Packet data protocol (PDP) context is an example of a PDN connection.

Next the UE can perform a P-CSCF discovery, where the UE can discover a P-CSCF which is suitable for use for the communications to the IMS. The procedure for the P-CSCF discovery can be dependant on the type of used IP-CAN. The UE can acquire an IP address of the P-CSCF using DHCP or other means. The UE can request configuration information, that can include the domain name server (DNS) and P-CSCF addresses, from a DHCP server.

The UE can perform emergency service procedures, for example an emergency registration, when the UE detects that an emergency session is being requested.

UE can detect that an emergency session is to be established, for example, because the end user may have dialed an emergency number (for example 112 in Europe or 911 in the US). The UE has to then determine whether resources are available for establishing the emergency session, for example, a packet data protocol (PDP) context to the network is needed. The UE may terminate ongoing communication sessions and/or release reserved bearer resources to get free resources for the emergency session.

Even if the UE is IMS registered, a new registration can be performed for emergency purposes only, if the UE is roaming outside its home network to handle the emergency session locally in the visited network, rather than in the home network of the user. The UE can also initiate an IMS emergency registration when it receives an "IMS emergency registration required" response as a result of an emergency session request.

When UE must initiate an IMS emergency registration, the UE can first initiate an emergency access to the IP-CAN, for example, when an emergency access has been defined for the particular type of IP-CAN. The purpose of the establishment of the emergency access is to ensure that an emergency session attempts are handled in the visited public land mobile network (VPLMN) when the UE is roaming.

The emergency access can also provide the UE with appropriate priority treatment and access to appropriate network elements, for example to a particular packet data gateway (PDG / SGSN) or P-CSCF in the VPLMN.

The UE can include an emergency indication in the signalling for establishing an IP-CAN connection.

Also in SIP, an emergency indication can be included in an emergency registration request (e.g. SIP REGISTER), for example, to inform the home network that roaming restrictions may not be applied. If the intention is to establish a local emergency call in a visited network, the home network of the user can ignore roaming restrictions for emergency registration requests.

P-CSCF can handle the registration requests with an emergency indication like any other registration request.

During the bearer registration or resource reservation, the UE can indicate to the IP-CAN that the attach request concerns an emergency service. The IP-CAN can detect the indication in the signaling from the UE and thereby decide to treat the bearer establishment as an emergency PDN connection.

The IP-CAN can allocate an IP address to the UE during the bearer resource request procedures. The IP address can be used by the UE for signaling in SIP. Next the UE can perform a P-CSCF discovery procedure.

If the UE has sufficient credentials to authenticate with the IMS network, the UE can initiate an IMS emergency registration. The UE can send a SIP REGISTER request to the selected P-CSCF and can include the obtained IP address, for example, in SIP Contact header of the REGISTER request.

The IMS registration request can include an emergency indication. The implicit registration set of the emergency Public User Identifier can contain an associated TEL URI that is used to call back the user from the PSTN. After registration, the UE can initiate an IMS emergency session establishment using the IMS session establishment procedures containing an emergency session indication and any registered Public User Identifier.

According to an aspect of the invention an emergency specific IP address range is configured consistently in the IMS (P-CSCF) and 3GPP packet core (GGSN/P-GW). On emergency attach, the GGSN or P-GW can assign only IP addresses from the emergency specific address range.

Configuring the emergency PDN connection specific IP address ranges in the P-CSCF, the P-CSCF can determine whether the UE uses an emergency PDN connection or not based on the UE's contact address in the REGISTER request.

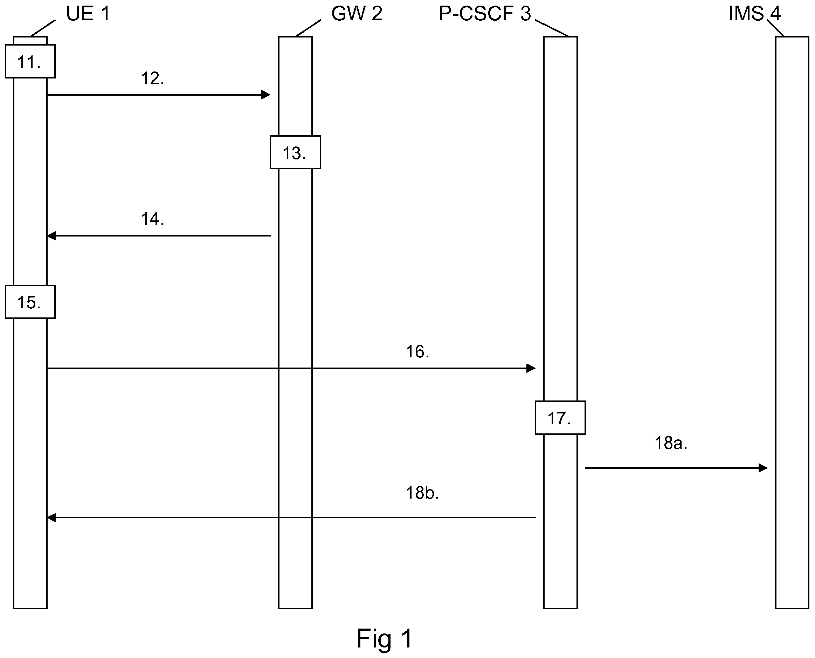

Figure 1 illustrates an example signaling flow according to an aspect the invention. In 11, UE 1 can detect that an emergency PDN connection and an emergency registration to the network 4 is required, for example, when a user is dialing an emergency number and the UE 1 is not yet registered to the IMS network 4. In 12, the UE 1 can initiate establishment of a PDN connection with a gateway 2, such as an GGSN or a P-GW. The UE 1 can indicate that the PDN connection is needed for emergency purposes by including a corresponding indication in the signaling 12. In 13, the GW 2 can assign for the UE 1 an IP address from the range of IP addresses reserved for the emergency PDN connection and return the assigned IP address to the UE 1 in signal 14. In 15, the UE 1 can store the IP address. The UE 1 can use the IP address, for example, in SIP signaling with the IMS network 4. In 16, the UE 1 can transmit a SIP REGISTER request to a P-CSCF 3 and can include the IP address as UE's contact address, for example, in SIP Contact header in the REGISTER request. The UE 1 can also indicate that the REGISTER request is sent to register the user for emergency purpose by including an emergency indication in the request. In 17, the P-CSCF 3 can detect the emergency indication in the REGISTER request. The P-CSCF 3 can maintain a list of IP addresses reserved for the emergency PDN connection. The same IP addresses can be configured for the emergency PDN connection in both the GW 2 and the P-CSCF 3. Thereby, the P-CSCF 3 can determine 17 based on the IP address in the REGISTER request, if the REGISTER is received using the emergency PDN connection. If the REGISTER request 16 is received using the emergency PDN connection and the REGISTER included the emergency indication, the P-CSCF 3 can transmit in signal 18a the REGISTER request towards the IMS 4. However, if the REGISTER request 16 is received using the emergency PDN connection but the REGISTER does not include the emergency indication, the P-CSCF 3 can reject the REGISTER request in 18b, for example, with a suitable SIP 4xx response.

According to an aspect of the invention, a P-CSCF can detect if UE uses emergency PDN connection for non-emergency registration request. By assigning specific IP address range for emergency PDN connection and configuring the same range in the P-CSCF, operators can enable the P-CSCF to detect based on the registered Contact address if the UE uses an emergency PDN connection for initial registration. If the P-CSCF detects that the UE uses the emergency PDN connection for a non-emergency registration request, the P-CSCF can reject that request by a 4xx SIP response.

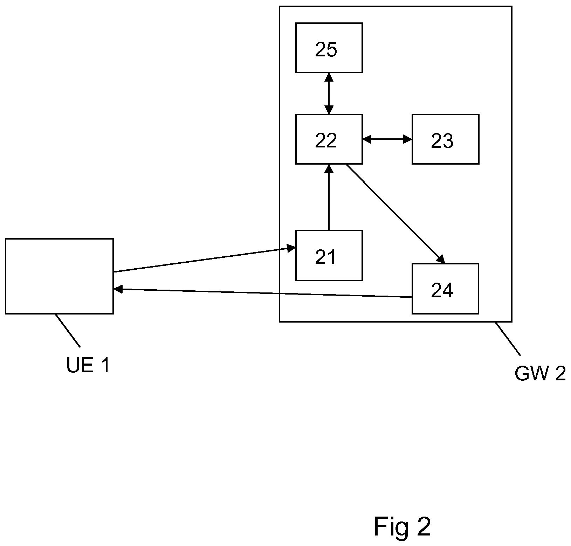

Figure 2 illustrates an example internal structure and functions of apparatus implementing aspects of the invention. A packet gateway 2 (GGSN/P-GW) can have a receiving unit 21 configured to receive from UE 1 a request to establish a PDN connection, for example, a PDP context. An assigning unit 22 can be configured to assign for the UE an IP address and a deciding unit 25 can be configured to decide if the PDN connection is needed for emergency purposes ("emergency PDN connection"). The deciding unit 25 can be configured to check if an emergency indication is received from the UE during the PDN connection establishment. If the PDN connection is for emergency purpose, the assigning unit 22 can be configured to retrieve from a maintaining unit 23 an IP address for the emergency PDN connection. The maintaining unit 23 can be configured to maintain IP addresses which can be allocated for UEs. The maintaining unit 23 can maintain part of IP addresses for the emergency PDN connection only, which can be for example an IP address range. A transmitting unit 24 can be configured to transmit the assigned IP address to the UE 1, for example, in a signaling message during the establishment of the PDN connection.

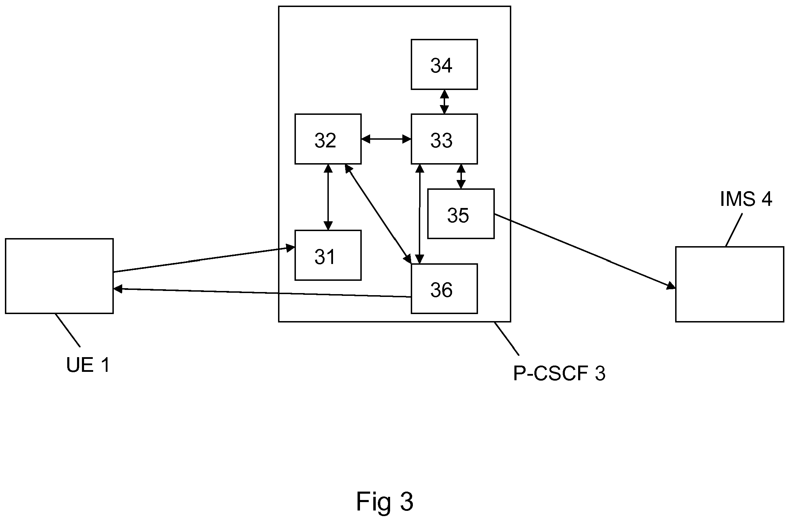

Figure 3 illustrates an example internal structure and functions of apparatus implementing aspects of the invention. A session control entity 3, such as a P-CSCF, can have a receiving unit 31 configured to receive a request to register a user 1 to the IMS network 4. The request can be a SIP REGISTER request. A registration unit 32 can be configured to determine if the request is a request to register for an emergency purpose, for example, based on an indication of an emergency registration in the request. The registration unit 32 can, based on the indication, determine whether the request is a non-emergency registration request or an emergency registration request.

A maintaining unit 34 can be configured to maintain information on internet protocol (IP) addresses allocated for emergency packet data connection. For example a specific range of IP addresses can be reserved for the emergency packet data connection. A determination unit 33 can be configured to determine if the request has been received via an emergency packet data connection by comparing if an IP address in the request belongs to the IP addresses allocated for emergency packet data connection. The IP address in the request can be a contact address of the user and/or can be embedded, for example, in Contact header of the SIP request.

A rejecting unit 36 can be configured to communicate with the registration unit 32 and/or the determination unit 33 and/or can be configured to reject the request if the used IP address has been reserved for the emergency packet data connections but the request is not a request to register for the emergency purpose. The rejection can be done by transmitting a SIP response to the user 1, for example, some SIP 4xx response.

A transmitting unit 35 can be configured to transmit the registration request further in the IMS network 4, for example, to a next CSCF:
1.) if the request is for an emergency purpose, and/or,
2.) when the request is not for emergency purpose and is not received via an emergency packet data connection.

All units described above in relation to figures 2 and 3 may be implemented for example using microprocessors, chips and/or other electrical components and/or by software.

A gateway entity and a session control entity may be physically implemented in a switch, router, server or other hardware platform or electronic equipment which can support data transmission and processing tasks, or can be implemented as a component of other existing device.

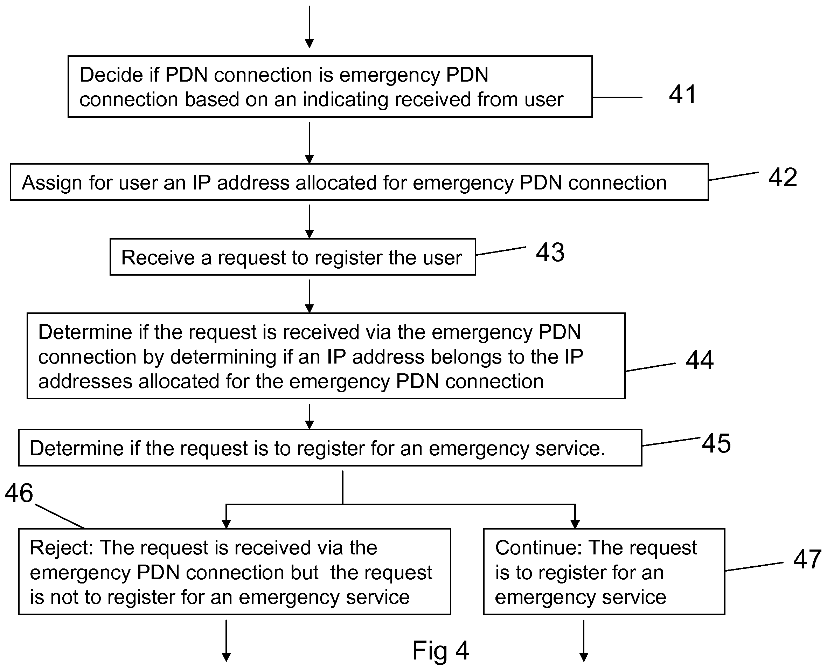

Figure 4 illustrates an example process for implementing aspects of the invention. In 41, it is decided if a PDN connection which UE 1 is establishing shall be treated as an emergency PDN connection, for example based on an indicating received from the UE 1. In 42, an IP address allocated for emergency PDN connection is assigned for the UE 1 if the PDN connection is an emergency PDN connection. After the IP address has been returned to the UE 1, a SIP REGISTER request in received 43. In 44, it is determined if the request is received via an emergency PDN connection by determining if an IP address, for example in contact header of REGISTER request, belongs to the IP addresses allocated for the emergency PDN connection. In 45, it is determined if the request is to register the UE 1 for an emergency service.

Determinations 44 and 45 can be done in different order. In 46, if based on the determinations the request is received via the emergency PDN connection but the request is not to register for an emergency service, the request can be rejected, for example with a negative SIP response (4xx). In 47, if the request is to register for an emergency service the registration procedure can continue as in normal registration for emergency services.

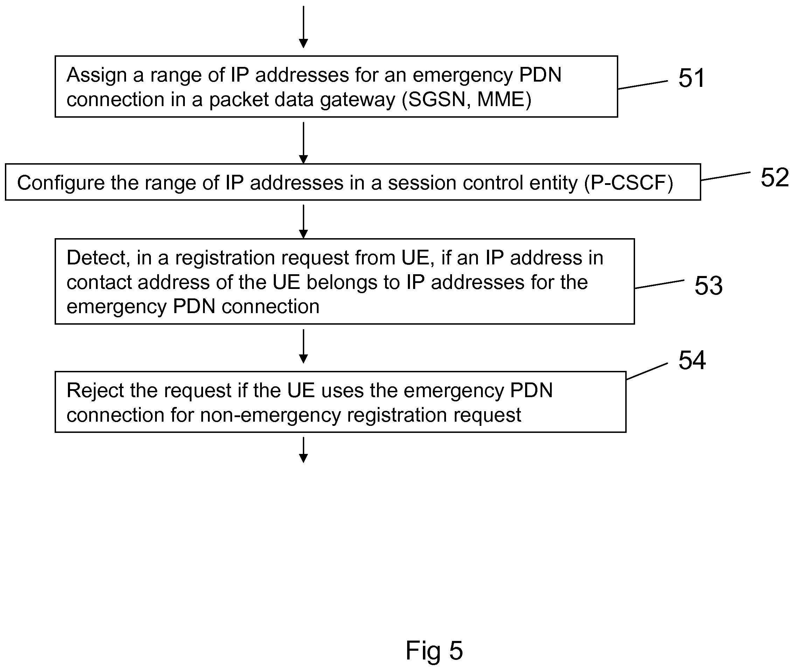

Figure 5 illustrates another example process for implementing aspects of the invention. In 51, a range of IP addresses are assigned for an emergency PDN connection, for example in a packet data gateway (GGSN, P-GW). An example range can be defined for example as: 12.34.1.1. to 12.34.5.255. Instead of a range, alternative rules can used to select a specific set of IP addresses for the emergency PDN connection.

In 52, the same range of IP addresses is configured in a session control entity (P-CSCF) as being reserved for the emergency PDN connection. In 53, it is detected if an IP address in contact address of the UE 1 in a registration request from the UE 1 belongs to IP addresses reserved for the emergency PDN connection. In 54, if the UE 1 uses the emergency PDN connection for non-emergency registration request the request can be rejected.

For the purpose of the present invention as described herein above, it should be noted that
- an access technology via which signaling is transferred to and from a network element or node may be any technology by means of which a node can access an access network (e.g. via a base station or generally an access node). Any present or future technology, such as WLAN (Wireless Local Access Network), WiMAX (Worldwide Interoperability for Microwave Access), BlueTooth, Infrared, and the like may be used; although the above technologies are mostly wireless access technologies, e.g. in different radio spectra, access technology in the sense of the present invention implies also wirebound technologies, e.g. IP based access technologies like cable networks or fixed lines but also circuit switched access technologies; access technologies may be distinguishable in at least two categories or access domains such as packet switched and circuit switched, but the existence of more than two access domains does not impede the invention being applied thereto,
- usable access networks may be any device, apparatus, unit or means by which a station, entity or other user equipment may connect to and/or utilize services offered by the access network; such services include, among others, data and/or (audio-) visual communication, data download etc.;
- a user equipment may be any device, apparatus, unit or means by which a system user or subscriber may experience services from an access network, such as a mobile phone, personal digital assistant PDA, or computer;
- method steps likely to be implemented as software code portions and being run using a processor at a network element or terminal (as examples of devices, apparatuses and/or modules thereof, or as examples of entities including apparatuses and/or modules therefor), are software code independent and can be specified using any known or future developed programming language as long as the functionality defined by the method steps is preserved;
- generally, any method step is suitable to be implemented as software or by hardware without changing the idea of the invention in terms of the functionality implemented;
- method steps and/or devices, apparatuses, units or means likely to be implemented as hardware components at a terminal or network element, or any module(s) thereof, are hardware independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components; in addition, any method steps and/or devices, units or means likely to be implemented as software components may for example be based on any security architecture capable e.g. of authentication, authorization, keying and/or traffic protection;
- devices, apparatuses, units or means can be implemented as individual devices, apparatuses, units or means, but this does not exclude that they are implemented in a distributed fashion throughout the system, as long as the functionality of the device, apparatus, unit or means is preserved,
- an apparatus may be represented by a semiconductor chip, a chipset, or a (hardware) module comprising such chip or chipset; this, however, does not exclude the possibility that a functionality of an apparatus or module, instead of being hardware implemented, be implemented as software in a (software) module such as a computer program or a computer program product comprising executable software code portions for execution/being run on a processor;
- a device may be regarded as an apparatus or as an assembly of more than one apparatus, whether functionally in cooperation with each other or functionally independently of each other but in a same device housing, for example.

The invention is not limited to registration handling in the IMS network(s), but may also be applied in other type of networks having similar kind of session control entity and wherein emergency registration can be given priority in both packet data bearer and registration procedure. Functions of the gateway entity and session control entity described above may be implemented by code means, as software, and loaded into memory of a computer.

## Claims

1. A session control entity (3), said session control entity (3) comprising:
means for maintaining (34) a defined range of internet protocol addresses allocated for emergency packet data connections, said range of internet protocol addresses being shared by a packet data network gateway (2) and said session control entity (3),
means for receiving (31) a request to register a user (1) equipment for an emergency service in an internet protocol multimedia subsystem (4), said request including an internet protocol address for the user equipment, said internet protocol address being assigned to said user equipment by the packet data network gateway (2) from said range of internet protocol addresses,
means for determining (32) whether the request is a request to register for an emergency service by detecting an emergency indication in the request,
means for determining (33) whether the request is received via an emergency packet data connection, by determining whether the internet protocol address in the request is within the range of internet protocol addresses allocated for emergency packet data connections,
means for rejecting (36) the request when, based on the determinations, the request is received via an emergency packet data connection and the request is not a request to register for an emergency service, and
means for transmitting (35) the request towards the internet protocol multimedia subsystem (4) when, based on the determinations, the request is received via an emergency packet data connection and the request is a request to register for an emergency service.

2. A session control entity (3) of claim 1, wherein the internet protocol address in the request comprises a contact address of the user and/or is embedded in Contact header of Session Initiation Protocol.

3. A session control entity (3) of any of claims 1 or 2, further comprising means for transmitting (35) the request to another session control entity if, based on the determining, the request comprises the request to register for an emergency service.

4. A method comprising:
maintaining a defined a range of internet protocol addresses for emergency packet data connections in a packet data network gateway (2),
maintaining the same range of internet protocol addresses in a session control entity (3) for an internet protocol multimedia subsystem (4),
assigning an internet protocol address from the range of internet protocol addresses for emergency packet data connections to a user equipment (1) by said packet data network gateway (2);
detecting (53) by the session control entity (3), when receiving a registration request from the user equipment (1), whether the user equipment (1) is using an emergency packet data connection for a non-emergency registration request, wherein the detecting comprises:
determining whether the internet protocol address in the request is within the range of internet protocol addresses for emergency packet data connections; and,
determining whether the request is a request to register for an emergency service by detecting an emergency indication in the request;
the method further comprising rejecting (54) the request when, based on the determinations, the request is received via an emergency packet data connection and the request is not a request to register for an emergency service, or transmitting the request towards the internet protocol multimedia subsystem (4) when, based on the determinations, the request is received via an emergency packet data connection and the request is a request to register for an emergency service.

5. A system comprising:
means for maintaining (23) a defined range of internet protocol addresses allocated for emergency packet data connections in a packet data network gateway (2),
means for maintaining (34) the same range of internet protocol addresses in a session control entity (3) for an internet protocol multimedia subsystem (4),
means for assigning (22, 25) an internet protocol address from the range of internet protocol addresses for emergency packet data connections to a user equipment (1) by said packet data network gateway (2), and,
means for detecting, in the session control entity (3) for the internet protocol multimedia subsystem (4), when receiving a registration request from the user equipment (1), whether the user equipment (1) is using an emergency packet data connection for a non-emergency request, wherein the detecting comprises:
determining whether the internet protocol address in the request is within the range of internet protocol addresses for emergency packet data connections; and
determining whether the request is a request to register for an emergency service by detecting an emergency indication in the request;
the system further comprising:
means for rejecting (36) the request in the session control entity (3) when, based on the determinations, the request is received via an emergency packet data connection and the request is not a request to register for an emergency service, and
means for transmitting (35), in the session control entity (3), the request towards the internet protocol multimedia subsystem (4) when, based on the determinations, the request is received via an emergency packet data connection and the request is a request to register for an emergency service.

6. A computer program product comprising code means adapted to produce the steps of claim 4 when loaded into the memory of a computer.

## Patentansprüche

1. Sitzungssteuerungseinheit (3), wobei die Sitzungssteuerungseinheit (3) umfasst:
Mittel zum Unterhalten (34) eines definierten Bereichs von Internetprotokolladressen, die für Notfallpaketdatenverbindungen reserviert sind, wobei der Bereich von Internetprotokolladressen von einem Paketdaten-Netzwerk-Gateway (2) und der Sitzungssteuerungseinheit (3) gemeinsam genutzt wird,
Mittel zum Empfangen (31) einer Anforderung zum Registrieren einer Benutzerausrüstung (1) für einen Notdienst in einem Internetprotokoll-Multimedia-Subsystem (4), wobei die Anforderung eine Internetprotokolladresse für die Benutzerausrüstung umfasst, wobei die Internetprotokolladresse der Benutzerausrüstung durch das Paketdaten-Netzwerk-Gateway (2) aus dem Bereich der Internetprotokolladressen zugewiesen wird,
Mittel zum Bestimmen (32), ob die Anforderung eine Anforderung zur Registrierung für einen Notdienst ist, indem eine Notfallanzeige in der Anforderung erkannt wird,
Mittel zum Bestimmen (33), ob die Anforderung über eine Notfallpaketdatenverbindung empfangen wird, indem bestimmt wird, ob die Internetprotokolladresse in der Anforderung innerhalb des Bereichs der für Notfallpaketdatenverbindungen reservierten Internetprotokolladressen liegt,
Mittel zum Ablehnen (36) der Anforderung, wenn die Anforderung basierend auf den Bestimmungen über eine Notfallpaketdatenverbindung empfangen wird und die Anforderung keine Anforderung zur Registrierung für einen Notdienst ist, und
Mittel zum Übertragen (35) der Anforderung an das Internetprotokoll-Multimedia-Subsystem (4), wenn die Anforderung basierend auf den Bestimmungen über eine Notfallpaketdatenverbindung empfangen wird und die Anforderung eine Anforderung zur Registrierung für einen Notdienst ist.

2. Sitzungssteuerungseinheit (3) nach Anspruch 1, wobei die Internetprotokolladresse in der Anforderung eine Kontaktadresse des Benutzers umfasst und/oder in den Contact-Header des Session Initiation Protocol eingebettet ist.

3. Sitzungssteuerungseinheit (3) nach einem der Ansprüche 1 oder 2, ferner umfassend Mittel zum Übertragen (35) der Anforderung an eine andere Sitzungssteuerungseinheit, wenn die Anforderung basierend auf dem Bestimmen die Anforderung zum Registrieren für einen Notdienst umfasst.

4. Verfahren, umfassend:
Bereitstellen eines definierten Bereichs von Internetprotokolladressen für Notfallpaketdatenverbindungen in einem Paketdatennetzwerk-Gateway (2),
Bereitstellen des gleichen Bereichs von Internetprotokolladressen in einer Sitzungssteuerungseinheit (3) für ein Internetprotokoll-Multimedia-Subsystem (4),
Zuweisen einer Internetprotokolladresse aus dem Bereich von Internetprotokolladressen für Notfallpaketdatenverbindungen zu einer Benutzereinrichtung (1) durch das Paketdatennetzwerk-Gateway (2);
Erkennen (53) durch die Sitzungssteuerungseinheit (3) beim Empfangen einer Registrierungsanforderung von der Benutzerausrüstung (1), ob die Benutzerausrüstung(1) eine Notfallpaketdatenverbindung für eine Nicht-Notfall-Registrierungsanforderung verwendet, wobei das Erkennen umfasst:
Bestimmen, ob die Internetprotokolladresse in der Anforderung innerhalb des Bereichs der Internetprotokolladressen für Notfallpaketdatenverbindungen liegt; und
Bestimmen, ob die Anforderung eine Anforderung zur Registrierung für einen Notdienst ist, indem eine Notfallanzeige in der Anforderung erkannt wird;
wobei das Verfahren ferner das Ablehnen (54) der Anforderung umfasst, wenn die Anforderung basierend auf den Bestimmungen über eine Notfallpaketdatenverbindung empfangen wird und die Anforderung keine Anforderung zur Registrierung für einen Notdienst ist, oder das Übertragen der Anforderung an das Internetprotokoll-Multimedia-Subsystem (4) umfasst, wenn die Anforderung basierend auf den Bestimmungen über eine Notfallpaketdatenverbindung empfangen wird und die Anforderung eine Anforderung zur Registrierung für einen Notdienst ist.

5. System, umfassend:
Mittel zum Unterhalten (23) eines definierten Bereichs von Internetprotokolladressen, die für Notfallpaketdatenverbindungen in einem Paketdaten-Netzwerk-Gateway (2) reserviert sind,
Mittel zum Unterhalten (34) des gleichen Bereichs von Internetprotokolladressen in einer Sitzungssteuerungseinheit (3) für ein Internetprotokoll-Multimedia-Subsystem (4),
Mittel zum Zuweisen (22, 25) einer Internetprotokolladresse aus dem Bereich von Internetprotokolladressen für NotfallPaketdatenverbindungen zu einer Benutzereinrichtung (1) durch das Paketdatennetzwerk-Gateway (2); und
Mittel zum Erkennen in der Sitzungssteuerungseinheit (3) für das Internetprotokoll-Multimedia-Subsystem (4) beim Empfangen einer Registrierungsanforderung von der Benutzereinrichtung (1), ob die Benutzereinrichtung (1) eine Notfallpaketdatenverbindung für eine Nicht-Notfallanforderung verwendet, wobei das Erkennen umfasst:
Bestimmen, ob die Internetprotokolladresse in der Anforderung innerhalb des Bereichs der Internetprotokolladressen für Notfallpaketdatenverbindungen liegt; und
Bestimmen, ob die Anforderung eine Anforderung zur Registrierung für einen Notdienst ist, indem
eine Notfallanzeige in der Anforderung erkannt wird; Das System ferner umfassend:
Mittel zum Ablehnen (36) der Anforderung in der Sitzungssteuerungseinheit (3), wenn die Anforderung basierend auf den Bestimmungen über eine Notfallpaketdatenverbindung empfangen wird und die Anforderung keine Anforderung zur Registrierung für einen Notdienst ist, und
Mittel zum Übertragen (35) der Anforderung in der Sitzungssteuerungseinheit (3) an das Internetprotokoll-Multimedia-Subsystem (4), wenn die Anforderung basierend auf den Bestimmungen über eine Notfallpaketdatenverbindung empfangen wird und die Anforderung eine Anforderung zur Registrierung für einen Notdienst ist.

6. Computerprogrammprodukt, das Codemittel umfasst, die dazu ausgelegt sind, die Schritte nach Anspruch 4 zu erzeugen, wenn sie in den Speicher eines Computers geladen werden.

## Revendications

1. Entité de contrôle de session (3), l'entité de contrôle de session (3) comprenant :
des moyens pour maintenir (34) une plage définie d'adresses de protocole Internet allouées pour des connexions d'urgence de données par paquets, ladite plage d'adresses de protocole Internet étant partagée par une passerelle de réseau de données par paquets (2) et par ladite entité de contrôle de session (3),
des moyens pour recevoir (31) une demande d'enregistrement d'un équipement d'utilisateur (1) pour un service d'urgence dans un sous-système multimédia à protocole Internet (4), ladite demande comprenant une adresse de protocole Internet pour l'équipement d'utilisateur, ladite adresse de protocole Internet étant affectée audit équipement d'utilisateur par la passerelle de réseau de données par paquets (2) à partir de ladite plage d'adresses de protocole Internet,
des moyens pour déterminer (32) si la demande est une demande d'enregistrement pour un service d'urgence en détectant une indication d'urgence dans la demande,
des moyens pour déterminer (33) si la demande est reçue par le biais d'une connexion d'urgence de données par paquets, en déterminant si l'adresse de protocole Internet dans la demande se situe ou non dans la plage d'adresses de protocole Internet allouées pour les connexions d'urgence de données par paquets,
des moyens pour rejeter (36) la demande lorsque, sur la base des déterminations, la demande est reçue par le biais d'une connexion d'urgence de données par paquets et que la demande n'est pas une demande d'enregistrement pour un service d'urgence, et
des moyens pour transmettre (35) la demande vers le sous-système multimédia à protocole Internet (4) lorsque, sur la base des déterminations, la demande est reçue par le biais d'une connexion d'urgence de données par paquets et que la demande est une demande d'enregistrement pour un service d'urgence.

2. Entité de contrôle de session (3) selon la revendication 1, dans lequel l'adresse de protocole Internet dans la demande comprend une adresse de contact de l'utilisateur et/ou est incorporée dans l'en-tête de contact (Contact header) du protocole de lancement de session (Session Initiation Protocol).

3. Entité de contrôle de session (3) selon l'une quelconque des revendications 1 et 2, comprenant en outre des moyens pour transmettre (35) la demande à une autre entité de contrôle de session si, sur la base de la détermination, la demande comprend la demande d'enregistrement pour un service d'urgence.

4. Procédé comprenant les étapes suivantes :
maintien d'une plage définie d'adresses de protocole Internet pour des connexions d'urgence de données par paquets dans une passerelle de réseau de données par paquets (2),
maintien de la même plage d'adresses de protocole Internet dans une entité de contrôle de session (3) pour un sous-système multimédia à protocole Internet (4),
affectation d'une adresse de protocole Internet à partir de la plage d'adresses de protocole Internet pour des connexions d'urgence de données par paquets à un équipement d'utilisateur (1) par ladite passerelle de réseau de données par paquets (2) ;
détection (53) par l'entité de contrôle de session (3), lors de la réception d'une demande d'enregistrement de l'équipement d'utilisateur (1), si l'équipement d'utilisateur (1) utilise une connexion d'urgence de données par paquets pour une demande d'enregistrement non urgente, dans lequel la détection comprend les étapes suivantes :
détermination du fait que l'adresse de protocole Internet dans la demande se situe ou non dans la plage d'adresses de protocole Internet pour les connexions d'urgence de données par paquets ; et,
détermination du fait que la demande est ou non une demande d'enregistrement pour un service d'urgence en détectant une indication d'urgence dans la demande ;
le procédé comprenant en outre le rejet (54) de la demande lorsque, sur la base des déterminations, la demande est reçue par le biais d'une connexion d'urgence de données par paquets et que la demande n'est pas une demande d'enregistrement pour un service d'urgence, ou la transmission de la demande vers le sous-système multimédia à protocole Internet (4) lorsque, sur la base des déterminations, la demande est reçue par le biais d'une connexion d'urgence de données par paquets et que la demande est une demande d'enregistrement pour un service d'urgence.

5. Système comprenant :
des moyens pour maintenir (23) une plage définie d'adresses de protocole Internet allouées pour des connexions d'urgence de données par paquets dans une passerelle de réseau de données par paquets (2),
des moyens pour maintenir (34) la même plage d'adresses de protocole Internet dans une entité de contrôle de session (3) pour un sous-système multimédia à protocole Internet (4),
des moyens pour affecter (22, 25) une adresse de protocole Internet à partir de la plage d'adresses de protocole Internet pour des connexions d'urgence de données par paquets à un équipement d'utilisateur (1) par ladite passerelle de réseau de données par paquets (2), et
des moyens pour détecter, dans l'entité de contrôle de session (3) du sous-système multimédia de protocole Internet (4), lors de la réception d'une demande d'enregistrement de l'équipement d'utilisateur (1), si l'équipement d'utilisateur (1) utilise ou non une connexion d'urgence de données par paquets pour une demande non urgente, la détection comprenant:
la détermination du fait que l'adresse de protocole Internet dans la demande se situe ou non dans la plage d'adresses de protocole Internet pour les connexions d'urgence de données par paquets ; et,
la détermination du fait que la demande est ou non une demande d'enregistrement pour un service d'urgence en détectant une indication d'urgence dans la demande ; le système comprenant en outre :
des moyens pour rejeter (36) la demande dans l'entité de contrôle de session (3) lorsque, sur la base des déterminations, la demande est reçue par le biais d'une connexion d'urgence de données par paquets et que la demande n'est pas une demande d'enregistrement pour un service d'urgence, et
des moyens pour transmettre (35), dans l'entité de contrôle de session (3) la demande vers le sous-système multimédia à protocole Internet (4) lorsque, sur la base des déterminations, la demande est reçue par le biais d'une connexion d'urgence de données par paquets et que la demande est une demande d'enregistrement pour un service d'urgence.

6. Progiciel informatique comprenant des moyens de code agencés pour exécuter les étapes selon la revendication 4 lorsqu'il est chargé dans la mémoire d'un ordinateur.
